# EUROPEAN PATENT APPLICATION

(11) **EP 1 795 099 A1**
(43) Date of publication of application: **13.06.2007**
(21) Application number: 06256184.0
(22) Date of filing: 04.12.2006
(51) Int. Cl.: A47J 43/08

(54) **Kitchen appliance**

(30) Priority: 09.12.2005 CN 200510138050
(71) Applicant: Johnson Electric S.A., 2300 La Chaux-de-Fonds (CH)
(72) Inventor: Mok, Kam Shing, c/o Johnson Electr. Eng.Ltd., Tai Po Ind. Estate Tai Po,Hong-Kong (CN); Zhang, Guo Ji, c/o Johnson Electr. Eng.Ltd., Tai Po Ind. Estate Tai Po, Hong-Kong (CN); Kwan, Allan Wai Lun, c/o Johnson Electr. Eng.Ltd., Tai Po Ind. Estate Tai Po, Hong-Kong (CN)
(74) Representative: Hocking, Adrian Niall

(57) **Abstract**

A kitchen appliance 12, especially a blender, has a base unit 12 having an electric motor 20 for driving the appliance. The motor 20 has a high suction/high volume fan 50 attached to a lower end of the motor shaft 36 and a wind guide 52 disposed between the fan 50 and the stator core 46 so that the fan 50 draws air predominantly through the stator to cool the motor to avoid thermal overload

## Description

### Technical Field

This invention relates to kitchen appliances and in particular, to a blender.

### Background

The modem kitchen has many appliances each having an electric motor to drive its particular function. Blenders are one such appliance. The motor in a blender has a heavy duty cycle as the motor normally has to start under a full load and is turned off once the load is reduced, i.e., once the ingredients have been juiced or pureed, providing a lower load on the motor.

To handle such operating conditions, the appliance motor has been traditionally designed on the large side to handle the initial high load and to produce the high starting torque required without overheating. Hence, the weight of the drive unit or base unit of the blender has been very heavy. Also, as the size of the motor increases, the material cost of the motor increases as more iron and copper is required. Thus there is a desire to reduce the size of the motor, to reduce the weight of the appliance and to reduce the cost of the motor and thus, the cost of the appliance of which the motor is a significant proportion. Also, by using a smaller motor, less of earth's precious resources are consumed. However, simply using a smaller motor has not been an option as smaller motors do not have the necessary starting torque or power to operate the blender under full load without suffering from thermal overload and resulting motor failures.

Hence, the aim of the present invention is to provide an appliance, especially a blender, which is driven by a smaller, lighter motor without the problem of thermal overload or at least to provide the public with a useful choice.

### Summary of the Invention

Accordingly, the present invention provides a kitchen appliance comprising: a base unit; and a mixing jug; the mixing jug being releasably connected to and supported by the base unit and having internal implements driven by a motor accommodated within the base unit and interconnected by a releasable coupling; the base unit having inlet and exhaust ventilation openings for passage of air into and out of the base unit for cooling the motor; wherein the motor is located adjacent the inlet ventilation openings and driving a cooling fan fitted to a shaft of the motor for drawing air into the base unit through the inlet ventilation openings, through the motor and out of the base unit through the exhaust ventilation openings.

Preferably, the fan is a high suction centrifugal fan.

Preferably, the motor has a wind guide in the form of a tube co-operating with the fan for drawing cooling air through the motor.

Preferably, the motor is mounted vertically and the fan and the wind guide have an exhaust opening adjacent a bottom side of the base unit, the base unit having a housing which is substantially open at the bottom side and a cover which closes the bottom side and having apertures forming the exhaust ventilating openings located confronting the exhaust opening of the wind guide.

Preferably, the motor is a high speed small frame universal motor.

Preferably, the motor is a universal motor having a no-load speed without the fan of about 20,000 rpm.

Preferably, the fan alone reduces the no-load speed of the motor to about 19,000 rpm.

Preferably, the fan has an outer diameter which is greater than an outer diameter of the rotor.

Preferably, the appliance is a blender.

### Brief Description of the Drawings

One preferred embodiment of the invention will now be described, by way of example only, with reference to the accompanying drawings in which:
Figure 1 illustrates a kitchen appliance to which the present invention relates;
Figure 2 is a view from below of a base unit of the appliance of Figure 1;
Figure 3 is a view similar to Figure 2, with a cover removed showing a motor inside the base unit;
Figure 4 is a partial sectional view of the motor of the base unit of Figure 3;
Figure 5 is a view of a fan, being a part of the motor of Figure 4; and
Figure 6 illustrates a wind guide, being a part of the motor of Figure 4.

### Detailed Description of the Preferred Embodiment

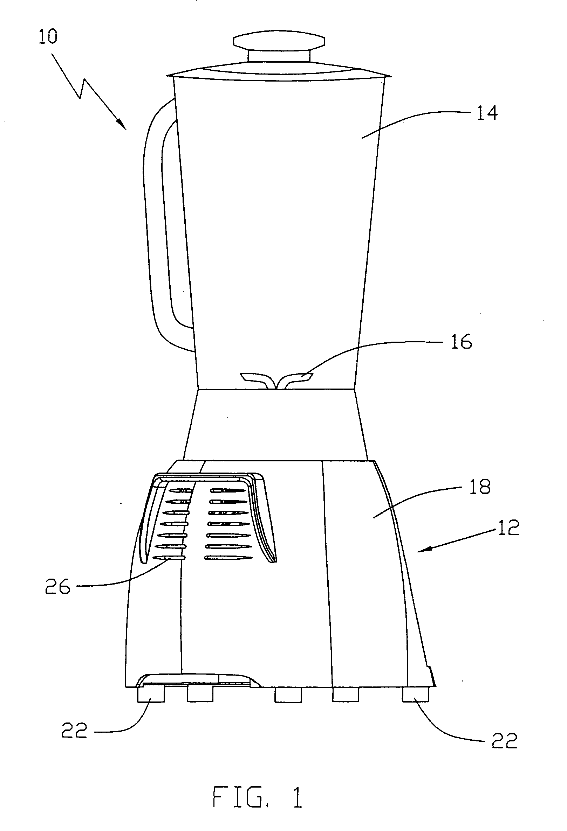

The kitchen appliance shown in Fig. 1 is a blender 10. It has a base unit 12, also known as a drive unit, which supports and is releasably attached to a jug or mixing unit 14. The mixing unit 14 has internal implements 16 for blending and/or pureeing ingredients added to the mixing unit. Implements 16 are driven by a motor 20 located within the base unit 12 and connected thereto by a releasable coupling in a known manner.

The base unit 12 has a housing 18, which accommodates the motor 20 and has several feet 22 for raising the housing 18 off of a surface on which it is placed. The feet 22 may be attached to a cover 24, which closes the bottom surface of the housing 18. The housing 18, apart from the usual fixtures for holding and supporting the mixing unit 14, has a number of ventilation openings forming inlet vents 26 and exhaust vents 28, for the inflow and outflow of air for cooling the motor.

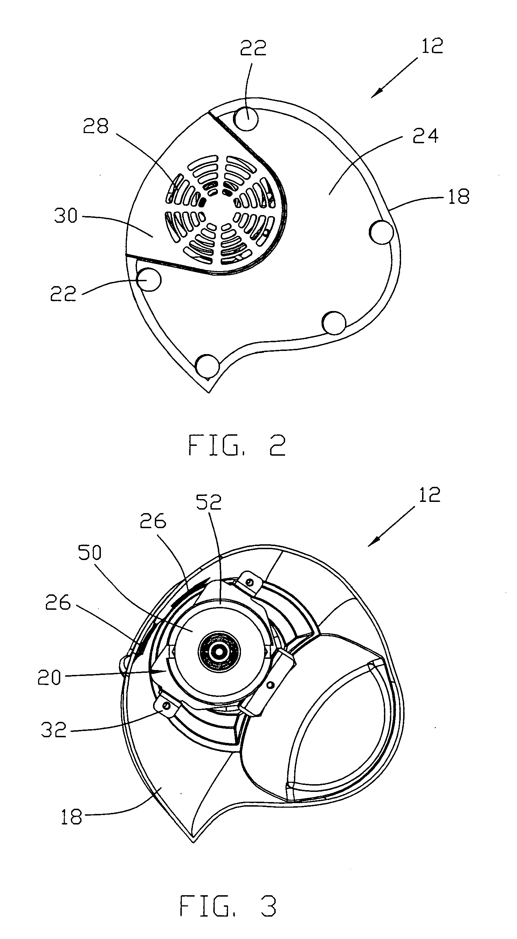

Figures 2 & 3 are views of the base unit from below. From Figure 3, it can be seen that the lower side of the housing 18 is substantially open and as shown in Figure 2, cover 24 closes this open bottom side. Cover 24 has a recessed area 30 in which the exhaust vents 28 are formed. The recessed area 30 leads to a cutaway portion in a rear edge of housing 18, thus forming a channel under the base unit for the flow of the exhausted cooling air.

In Figure 3, the cover 24 has been removed, revealing the motor, which is shown being attached to an upper inside surface of the housing 18 by an intermediate mounting plate 32. By suitable modification of a bracket of the motor and of the mounting projections on the housing, the motor could be directly connected to the housing, if so desired. As such, the motor 20 is mounted vertically within the base unit 12 and the releasable coupling mechanism is fitted to the upper end of the motor shaft which projects through the housing 18 for mating with and driving the implements of the mixing unit.

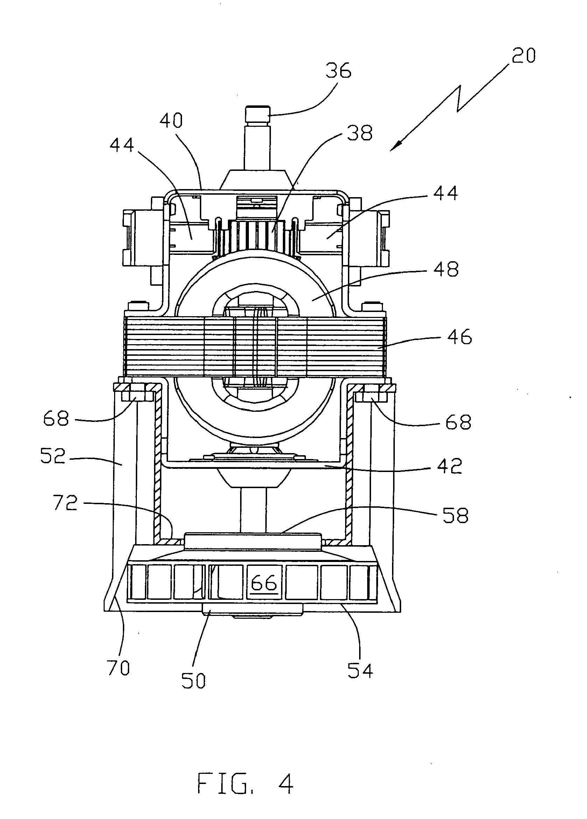

The motor is more clearly shown in Figure 4. The motor 20 is a small frame (68 mm OD - outside diameter) universal motor. The motor 30 has a rotor 34 formed by a motor shaft 36, a commutator 38, a rotor core and rotor windings wound about the poles of the rotor core and terminated on the commutator 38. The motor 20 is journalled in bearings held by upper and lower bearing brackets 40, 42. Upper bearing bracket 40 also supports brush gear in the form of two cage brushes 44 which make sliding contact with the commutator 38 for electrically connecting the windings to a source of electric power. The motor 20 has a stator core 46 and stator windings 48 located about poles of the stator core. The upper and lower bearing brackets 40, 42 are fixed to the stator core 46, thus ensuring correct alignment between the stator and rotor. Both stator core and rotor core are laminated cores of electrical steel.

Fitted to the lower end of the shaft 36 is a fan 50. The fan 50 is a high suction, high volume centrifugal type impeller fan with the suction inlet facing the rotor core. A wind guide 52 couples the inlet of the fan to the stator.

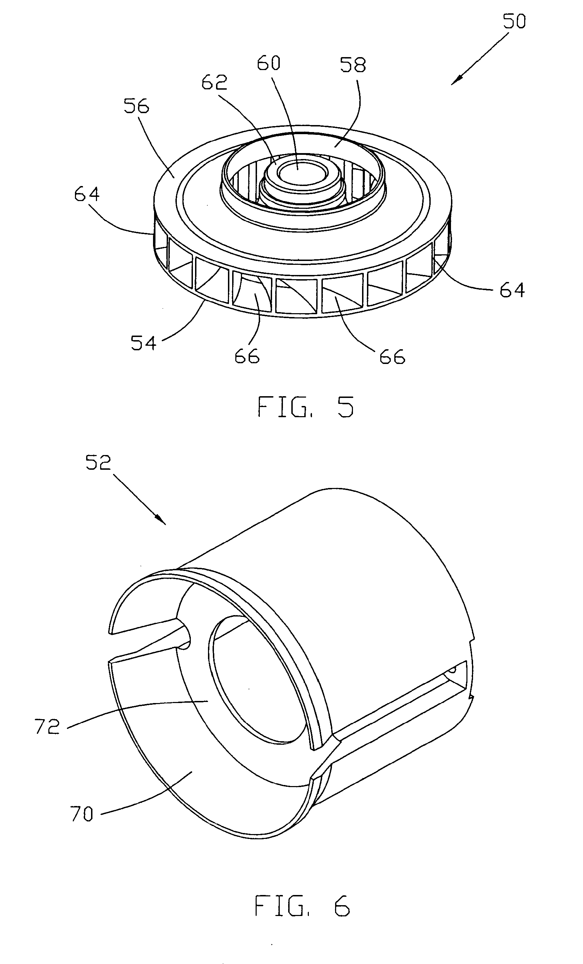

The fan 50 is more clearly shown in Fig. 5. The fan 50 is of the centrifugal impeller type, also known as radial type, such as those used in vacuum cleaners. The fan 50 has a closed base plate 54 and an open shroud 56 with a central opening 58 forming the suction inlet. The motor shaft 36 passes through the central opening 58 and through a mounting hole 60 in a tapered boss 62 of the base plate 54. The shroud 56 and base plate 54 are connected together and held apart by a plurality of swept blades 64 which, in use, draw air from the central opening 58 of the shroud and expelling it out through peripheral exhaust openings (impeller outlets) 66 formed by the gap between adjacent fan blades, the base plate and shroud of the fan.

The wind guide 52, shown in section in Fig. 4 and shown in full in Fig. 6, is fixed to the stator by screws 68 used to fix the bearing brackets 40, 42 and extends between the stator core 46 and the fan 50. The wind guide 52 has a tubular form and the lower opening is formed with a tapered mouth 70, which surrounds the impeller outlets 66 and directs the resulting airflow from the fan downwardly. Adjacent the mouth 70 is a radially inwardly extending ledge 72 forming a restricted opening within the tube. The restricted opening is adapted to receive the central opening 58 of the fan 50 and the ledge 72, in conjunction with the fan 50 and the tapered mouth 70, restricts air flow between the fan outlets and fan inlet to limit air recirculating across the fan. The wind guide 52 thus facilitates the fan 50 to draw air through the stator core and over the stator windings and the rotor.

As the fan 50 is a high suction/high volume fan, the volume of air drawn in through the motor will also cool the commutator 38 and brush gear 44 even though the wind guide 52 does not extend pass the stator core 46, due also to the positioning of the ventilation openings 26 in the housing 18.

The feet allow the exhaust air to quickly dissipate out of the housing 18 without significant recirculating within the housing 18.

Thus, in use, the fan 50 and wind guide 52 draws cooling air into the housing 18 through the inlet vents 26 through and over the motor 20, through the wind guide 52, through the fan 50 and out of the housing 18 via the exhaust vents 28 on the bottom side, which is spaced from the surface of the cupboard or work area on which it is placed by the feet 22. Feet 22 may be any suitable height to give adequate clearance for the exhaust air and 10 mm was used in the preferred embodiment.

The preferred embodiment used a motor with an outer diameter (OD) of 68 mm which gives a saving in steel weight alone of more than 60% from the 98 mm OD motor it replaced. The motor had a no load speed of 20,000 rpm without the fan, a no load speed of 19,000 rpm with the fan, a rated maximum power input of 350 watts and a rated full load speed of 14,000 to 15,000 rpm. The fan has an outer diameter of 62 mm and an exhaust outlet height of 10 mm. Also, the motor has stator winding tappings giving the operator a choice of three different speed settings.

While one preferred embodiment of the invention has been described in detail by way of illustration, many variations may be apparent to the skilled reader and it is intended that the present invention covers all such modifications and variations that fall within the scope of the appended claims.

## Claims

1. A kitchen appliance comprising:
a base unit (12); and
a mixing jug (14);
the mixing jug (14) being releasably connected to and supported by the base unit (12) and having internal implements (16) driven by a motor (20) accommodated within the base unit (12) and interconnected by a releasable coupling;
the base unit (12) having inlet and exhaust ventilation openings (26,28) for passage of air into and out of the base unit (12) for cooling the motor (20);
wherein the motor (20) is located adjacent the inlet ventilation openings (56) and driving a cooling fan (50) fitted to a shaft (36) of the motor for drawing air into the base unit (12) through the inlet ventilation openings (26), through the motor (20) and out of the base unit (12) through the exhaust ventilation openings (28).

2. A kitchen appliance according to Claim 1, wherein the fan (50) is a high suction centrifugal fan.

3. A kitchen appliance according to Claim 1 or 2, wherein the motor (20) has a wind guide (52) in the form of a tube co-operating with the fan (50) for drawing cooling air through the motor (20).

4. A kitchen appliance according to Claim 3, wherein the motor (20) is mounted vertically and the fan (50) and the wind guide (52) have an exhaust opening adjacent a bottom side of the base unit (12), the base unit having a housing (18) which is substantially open at the bottom side and a cover (24) which closes the bottom side and having apertures forming the exhaust ventilation openings (28) located confronting the exhaust opening of the wind guide (52).

5. A kitchen appliance according to Claim 4, wherein the cover (24) has a recessed portion (30) on which the exhaust ventilation openings (28) are formed, the recessed portion (30) forming a channel under the base unit (12) for the passage of exhaust air.

6. A kitchen appliance according to Claim 4 or 5, wherein the base (12) unit has a number of feet (22) extending downwardly from the cover (24) to space the base unit (12) from a supporting surface on which it is placed in use.

7. A kitchen appliance according to Claim 1, 2 or 3, wherein the motor (20) is a universal motor orientated vertically within the base unit (12) with an upper end of the shaft (36) fitted with the releasable coupling and the lower end of the shaft (36) fitted with the fan (50), the motor (20) has a lower bearing bracket (42) connected to the stator for supporting the shaft (36) via a bearing and an upper bearing bracket (40) connected to the stator for supporting the shaft (36) via a bearing and supporting the brush assemblies (44), the motor (20) being fixed to the base unit (12) by the upper bearing bracket (40).

8. A kitchen appliance according to Claim 7, wherein a separate mounting plate (32) connects the upper bracket (40) to the housing (18) of the base unit (12).

9. A kitchen appliance according to any one of the preceding claims, wherein the motor (20) is a high speed small frame universal motor.

10. A kitchen appliance according to any one of the preceding claims, wherein the motor (20) is a universal motor having a no-load speed without the fan of about 20,000 rpm.

11. A kitchen appliance according to Claim 10, wherein the fan (50) alone reduces the no-load speed of the motor (20) to about 19,000 rpm.

12. A kitchen appliance according to any one of the preceding claims, wherein the motor (20) is a universal motor having a 68 mm frame and a power rating of 350 watts.

13. A kitchen appliance according to any one of the preceding claims, wherein the fan (50) has an outer diameter which is greater than an outer diameter of the rotor.

14. A kitchen appliance according to any one of the preceding claims, wherein the appliance is a blender (10).
